# EUROPÄISCHE PATENTSCHRIFT

(11) **EP 1 604 898 B1**
(45) Veröffentlichungstag und Bekanntmachung des Hinweises auf die Patenterteilung: **05.01.2011**
(21) Anmeldenummer: 05012371.0
(22) Anmeldetag: 08.06.2005
(51) Int. Cl.: B64D 11/02, C02F 9/00

(54) **Wasseraufbereitung für Luftfahrzeuge**
Water treatment for aircraft
Traitement de l'eau pour avions

(30) Priorität: 09.06.2004 DE 102004028036; 09.06.2004 US 578690 P
(43) Veröffentlichungstag der Anmeldung: 14.12.2005
(73) Patentinhaber: Airbus Operations GmbH, 21129 Hamburg (DE)
(72) Erfinder: Hoffjann, Claus, 21629 Neu Wulmstorf (DE); Brilsky, Holger, 22089 Hamburg (DE); Heinrich, Hans-Jürgen, 22609 Hamburg (DE)
(74) Vertreter: Maiwald Patentanwalts GmbH

(56) Entgegenhaltungen:
- EP-A- 1 354 856
- DE-A1- 10 229 309
- US-A- 4 871 452
- US-A- 6 143 185
- SEKOULOV I ; FIGUEROA A ; OLES J: "Investigation on wastewater reuse on passenger aircraft" WATER SCIENCE AND TECHNOLOGY, Bd. 23, Nr. 10-12, 1991, Seiten 2199-2208, XP008051187

## Beschreibung

Die vorliegende Erfindung betrifft die Wasseraufbereitung für Luftfahrzeuge. Insbesondere betrifft die vorliegende Erfindung eine Wasseraufbereitungsanlage für ein Luftfahrzeug, ein Verfahren zum Aufbereiten von Wasser in einem Luftfahrzeug sowie ein Luftfahrzeug, umfassend eine entsprechende Wasseraufbereitungsanlage.

Bei herkömmlichen Luftfahrzeugen wird Grauwasser, d. h. alle Wässer aus Waschbecken und Galleys (Bordküchen), über einen sog. "Drainmast", bei dem es sich um einen beheizten Auslaufstutzen an der Unterseite des Rumpfes handelt, über Bord gegeben. Das Schwarzwasser, bei dem es sich um die aus den Bordtoiletten anfallenden Abwässer handelt, wird im sog. "Wastetank" oder Abwassersammeltank gesammelt und schließlich am Boden entsorgt.

Zur Reinigung von Abwässern sind unterschiedliche Verfahren bekannt. Es gibt mechanische Verfahren, wie beispielsweise Filter, chemische Verfahren, die sich beispielsweise Aktivkohle oder anderer chemischer Substanzen, wie beispielsweise Desinfektionsmittel, bedienen sowie organische Methoden, wie sie in bakteriologischen Klärstufen Anwendung finden. Bekannte Anordnungen zur Reinigung von Abwässern, welche insbesondere in der Lage sind, eine zur Speisung von einer sog. Brennstoffaufbereitungsanlage (Reformer) ausreichende Wassermenge in ausreichender Wasserqualität aus Grauwasser oder gar Schwarzwasser bereitzustellen, sind groß, schwer oder zu langsam bzw. nicht ausreichend effizient für den Einsatz in einem Luftfahrzeug. Derartige Vorrichtungen sind z.B. aus der DE10229309A1 oder EP 1354856A1 bekannt.

Vor diesem Hintergrund ist es Aufgabe der vorliegenden Erfindung, eine verbesserte Wasseraufbereitung bereitzustellen, welche insbesondere zur Nutzung in einer Brennstoffaufbereitungsanlage für Brennstoffzellen verwendbar ist.

Gemäß einem Ausführungsbeispiel der vorliegenden Erfindung, wie in Anspruch 1 angegeben, wird die obige Aufgabe mittels einer Wasseraufbereitungsanlage für ein Luftfahrzeug gelöst, umfassend:
eine Brennstoffaufbereitungsanlage;
eine Wasserzuführungsanordnung zur Zuführung von Grauwasser oder Schwarzwasser;
eine Wasseraufbereitungsanordnung zur Aufbereitung des zugeführten Grauwassers oder Schwarzwassers; und
eine Wasserausgabeanordnung zur Ausgabe des aufbereiteten Grauwassers oder Schwarzwassers und zur Zuführung von aus dem aufbereiteten Grauwasser oder Schwarzwasser erzeugten Wasserdampf an eine Brennstoffaufbereitungsanlage;
wobei das von der Wasserausgabeanordnung ausgegebene Wasser von der Brennstoffaufbereitungsanlage nutzbar ist;
wobei die Wasseraufbereitungsanordnung eine erste Stufe, eine zweite Stufe und eine dritte Stufe umfasst;
wobei die erste Stufe zu einem ersten Filtern des zugeführten Grauwassers oder Schwarzwassers einen ersten Rotationsscheibenfilter umfasst;
wobei die zweite Stufe zu einem Binden von im Wasser enthaltenen Inhaltsstoffen an einer ersten chemisch aktiven Substanz ausgeführt ist; und
wobei die dritte Stufe zu einem zweiten Filtern des Wassers einen zweiten Rotafionsscheibenfilter umfasst;
wobei die Wasseraufbereitungsanordnung oder die Wasserausgabeanordnung einen Verdampfer umfasst;
wobei der Verdampfer zum Verdampfen des aufbereiteten Grauwassers oder Schwarzwassers ausgeführt ist;
wobei der Wasserdampf der Brennstoffaufbereitungsanlage zugeführt wird.

Das erfindungsgemäße System ermöglicht, sowohl das im Bordbetrieb anfallende Grauwasser als auch das Schwarzwasser derart zu recyceln, dass es nachfolgend in ausreichender Qualität vorliegt, um von einer bordinternen Brennstoffaufbereitungsanlage genutzt zu werden.

Somit ist es möglich, in Kombination mit einem Wassergenerierungssystem, wie beispielsweise einer Brennstoffzelle, die Gesamtmenge des an Bord eines Luftfahrzeuges befindlichen Wassers zu reduzieren und damit Gewicht und demzufolge auch Treibstoff und Laderaum einzusparen.

Durch die mehrstufige Ausführung der erfindungsgemäßen Wasseraufbereitungsanlage wird ein effizientes und gründliches Reinigen von Grau- oder Schwarzwasser bereitgestellt. Durch das erste Filtern können beispielsweise Feststoffe oder Schlacke aus dem Wassergemisch entfernt werden. In der zweiten Stufe dann können ggf. noch weitere Inhaltsstoffe, wie Salze, Phosphate und Sulfate, an die erste chemisch aktive Substanz gebunden werden, welche dann in der dritten Stufe, beispielsweise im Rahmen eines zweiten Filterprozesses, aus dem Wasser entfernt wird.

Der Verdampfer entfernt weitestgehend alle im Wasser verbliebenen Inhaltsstoffe und erzeugt nahezu deionisiertes Wasser, wie es für einen einer Brennstoffzelle vorgeschalteten Reformerprozess benötigt wird. Somit können durch den Verdampfer die im Wasser enthaltenen Salze zurückgehalten werden, so dass einer nachgeschalteten Brennstoffaufbereitungsanlage sauberer Wasserdampf bzw. Kondensat zuführbar ist.

Gemäß einem weiteren Ausführungsbeispiel der vorliegenden Erfindung, wie in Anspruch 2 angegeben, ist der im Verdampfer erzeugte Wasserdampf oder daraus entstehendes Kondensat über ein erstes Ventil entweder nach Außenbord ableitbar oder über das erste Ventil und einem zusätzlichen Rückschlagventil einer Brennstoffaufbereitungsanlage zuführbar.

Auf vorteilhafte Art und Weise ist hiermit sichergestellt, dass überschüssig erzeugter Wasserdampf einfach und zuverlässig abgeleitet werden kann, ohne dass es zu einer ungewollten Druckerhöhung im System kommt. Durch das zusätzliche Rückschlagventil wird zum Beispiel eine ungewünschte Druckbeaufschlagung (Rückschlag von brennbaren Gemischen) des Verdampfers durch den Reformer vorteilhaft verhindert.

Gemäß einem weiteren vorteilhaften Ausführungsbeispiel der vorliegenden Erfindung, wie in Anspruch 3 angegeben, sind Reststoffe aus dem Verdampfer über ein zweites Ventil nach Außenbord ableitbar.

Vorteilhafterweise ist es somit möglich, dass sich im Wasserverdampfer absetzende Reststoffe regelmäßig entfernt werden können. Die Reststoffe aus dem Verdampfer werden zum Beispiel durch Umschalten des Wegeventils beim normalen Waste-Servicing am Boden ebenso wie die Reststoffe aus dem Vakuumtank entleert.

Gemäß einem weiteren Ausführungsbeispiel der vorliegenden Erfindung, wie in Anspruch 4 angegeben, umfasst die Wasserzuführungsanordnung einen ersten Abwasserspeicher für Grauwasser oder Schwarzwasser, wobei der erste Abwasserspeicher als Vakuumbehälter ausgeführt ist.

Vorteilhafterweise ist der Vakuumbehälter mit den Fäkalienableitungsrohren aus den Bordtoiletten oder dergleichen verbunden, so dass die Fäkalien aufgrund des Unterdrucks über das Öffnen eines entsprechenden Ventils in den Vakuumtank hineingesaugt werden.

Gemäß einem weiteren vorteilhaften Ausführungsbeispiel der vorliegenden Erfindung, wie in Anspruch 5 angegeben, umfasst die Wasserzuführungsanordnung weiterhin einen zweiten Abwasserspeicher für Grauwasser, einen Vakuum-Transport und einen Auslaufstutzen, wobei das im zweiten Abwasserspeicher gespeicherte Grauwasser wahlweise vom zweiten Abwasserspeicher über den Vakuum-Transport in den ersten Abwasserspeicher oder über den Auslaufstutzen nach Außenbord ableitbar ist.

Vorteilhafterweise ist damit ein Zwischenspeicher für Grauwasser bereitgestellt, über welchen der Vakuumtank gespeist werden kann. Weiterhin gestattet der Auslaufstutzen ein wahlweises Ableiten der im Sammeltank gespeicherten Grauwassermenge nach Außenbord, falls beispielsweise die Kapazität des Sammeltanks erschöpft ist oder unnötiges Wasser beispielsweise aus Gewichtsgründen abgelassen werden soll.

Weitere vorteilhafte Ausführungsbeispiele der vorliegenden Erfindung sind in Ansprüchen 6 und 7 angegeben.

Gemäß einem weiteren vorteilhaften Ausführungsbeispiel der vorliegenden Erfindung, wie in Anspruch 8 angegeben, erfolgt in dem ersten Rotationsscheibenfilter eine zumindest teilweise Abtrennung und Ableitung der im zugeführten Grauwasser oder Schwarzwasser enthaltenen Flüssigkeit von den darin enthaltenen Rückständen. Die Rückstände sind hierbei in einen Abwasserspeicher der Wasserzuführungsanordnung rückleitbar.

Der Rotationsscheibenfilter stellt eine Vorrichtung zur Separation von Feststoffanteilen und Restflüssigkeit von einem im Grauwasser-/Schwarzwassergemisch enthaltenen wesentlichen Wasseranteil bereit, welche zuverlässig, gründlich und hinreichend effizient arbeitet. Da die herausgefilterten Feststoffanteile durch die Restflüssigkeit noch immer hinreichend viskos sind, können die Rückstände erfindungsgemäß in den ersten Abwasserspeicher zurückgeleitet werden.

Gemäß einem weiteren bevorzugten Ausführungsbeispiel der vorliegenden Erfindung, wie in Anspruch 9 angegeben, umfasst die zweite Stufe einen Vorlagebehälter, wobei in der zweiten Stufe dem Wasser im Vorlagebehälter ein Granulat aus zumindest der ersten chemisch aktiven Substanz oder einer zweiten chemisch aktiven Substanz beimischbar ist. Hierbei umfasst die zweite chemisch aktive Substanz Aktivkohle.

Vorteilhafterweise bindet das Granulat bzw. die darin enthaltenen ersten oder zweiten chemisch aktiven Substanzen im Wasser enthaltene Inhaltsstoffe, wie beispielsweise Salze, Phosphate oder Sulfate.

Weitere vorteilhafte Ausführungsbeispiele der vorliegenden Erfindung sind in Ansprüchen 10 bis 12 angegeben.

Gemäß einem weiteren bevorzugten Ausführungsbeispiel der vorliegenden Erfindung, wie in Anspruch 13 angegeben, umfasst die dritte Stufe einen Auslauf, wobei Wasser aus dem Vorlagebehälter in der dritten Stufe durch den zweiten Rotationsscheibenfilter zumindest teilweise abtrennbar ist und wobei nach zumindest teilweiser Abtrennung des Wassers das Wasser über den Auslauf ableitbar ist. Vorteilhafterweise ist somit eine einfache und effiziente Trennung zwischen gereinigtem bzw. vorgereinigtem Wasser und der ersten chemisch aktiven Substanz bzw. dem Granulat gewährleistet.

Weitere vorteilhafte Ausführungsbeispiele der vorliegenden Erfindung sind in Anspruch 14 angegeben. Anspruch 15 betrifft ein Luftfahrzeug mit dem erfindungsgemäßen Wasseraufbereitungssystem.

Gemäß der vorliegenden Erfindung, wie in Anspruch 16 angegeben, ist ein Verfahren zum Aufbereiten von Wasser in einem Luftfahrzeug angegeben, welches die folgenden Schritte umfasst:
Zuführung von Grauwasser oder Schwarzwasser durch eine Wasserzuführungsanordnung;
Aufbereitung des zugeführten Grauwassers oder Schwarzwassers durch eine Wasseraufbereitungsanordnung, umfassend ein erstes Filtern des zugeführten Grauwassers oder Schwarzwassers durch einen ersten Rotationsscheibenfilter, ein Binden von im Wasser enthaltenen Inhaltsstoffen an einer ersten chemisch aktiven Substanz, und ein zweites Filtern des Wassers durch einen zweiten Rotationsscheibenfilter;
Zuführen des mehrmalig gefilterten Wassers an einen Verdampfer;
Verdampfen des Wassers;
Zuführung des Wasserdampfs an eine Brennstoffaufbereitungsanlage;
wobei das von der Wasserausgabeanordnung ausgegebene Wasser von der Brennstoffaufbereitungsanlage nutzbar ist.

Vorteilhafterweise stellt das vorliegende Verfahren eine ausreichende Wassermenge für eine Brennstoffaufbereitungsanlage an Bord eines Luftfahrzeugs in der benötigten Qualität bereit, indem das im Bordbetrieb anfallende Grauwasser als auch das Schwarzwasser derart recycelt wird, dass es nachfolgend in ausreichender Qualität vorliegt, um von der bordinternen Brennstoffaufbereitungsanlage genutzt zu werden. Durch Kombination mit einem Wassergenerierungssystem, z. B. mittels Brennstoffzellen, wird hierbei die Gesamtmenge des an Bord eines Luftfahrzeuges befindlichen Wassers effektiv reduziert und damit Gewicht sowie Treibstoff und Ladekapazität eingespart.

Vorteilhafterweise ist durch das mehrstufige erfindungsgemäße Verfahren somit ein schnelles und qualitativ hochwertiges Reinigen bzw. Recyceln von im Bordbetrieb anfallendem Grauwasser oder Schwarzwasser gewährleistet.

Durch das erste Filtern können beispielsweise Feststoffe oder Schlacke aus dem Wassergemisch entfernt werden. Durch den Bindeschritt können ggf. noch weitere Inhaltsstoffe, wie Salze, Phosphate und Sulfate, an die erste chemisch aktive Substanz gebunden werden, welche dann durch den zweiten Filterprozess aus dem Wasser entfernt wird. Durch das Verdampfen werden die im Wasser enthaltenen Salze zurückgehalten, so dass einer nachgeschalteten Brennstoffaufbereitungsanlage sauberer Wasserdampf bzw. sauberes Kondensat zuführbar ist.

Im Folgenden werden mit Verweis auf die Figuren bevorzugte Ausführungsbeispiele der vorliegenden Erfindung beschrieben.
Fig. 1 zeigt eine schematische Darstellung einer Wasseraufbereitungsanlage gemäß einem Ausführungsbeispiel der vorliegenden Erfindung.
Fig. 2 zeigt ein Flussdiagramm eines Verfahrens gemäß einem Ausführungsbeispiel der vorliegenden Erfindung.

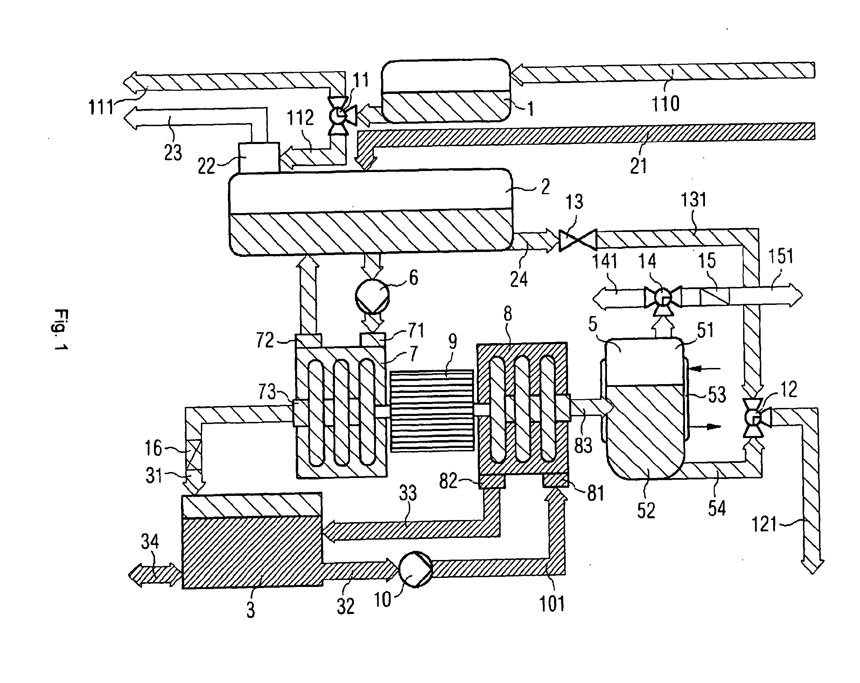

Die in Fig. 1 schematisch dargestellte Wasseraufbereitungsanlage besteht in ihren Hauptbestandteilen aus einem Vakuumbehälter oder ersten Abwasserspeicher 2, einem ersten Rotationsfilter 7, einem Vorlagebehälter 3, einem zweiten Rotationsfilter 8 und einem Verdampfer 5.

Die in Fig. 1 dargestellte Wasseraufbereitungsanlage eignet sich insbesondere zum Einbau in ein Luftfahrzeug oder Raumfahrzeug. Durch die Integration der erfindungsgemäßen Wasseraufbereitungsanlage in ein Luftfahrzeug oder Raumfahrzeug kann die Wasserversorgung durch effektive Wasserwiederaufarbeitung, insbesondere im Zusammenspiel mit einer Brennstoffaufbereitungsanlage und einer Brennstoffzelle, die als Wassergenerierungssystem eingesetzt wird, sichergestellt werden.

Brennstoffaufbereitungsanlagen (Reformer) dienen zur Gewinnung des in Kohlenwasserstoffen enthaltenen Wasserstoffes zur Nutzung in Brennstoffzellen. Typischer Weise wird hierfür oft neben dem Kohlenwasserstoff (z. B. Benzin, Dieselkraftstoff, Kerosin) zusätzlich Wasser benötigt, um einerseits eine ausreichende Anzahl von Sauerstoffatomen zu gewinnen, die sich im Reformerprozess mit den im Kohlenwasserstoff enthaltenen Kohlenstoffatomen zu CO oder CO₂ verbinden können, andererseits um genügend freie Wasserstoffmoleküle zu bilden. Das hierfür benötigte Wasser muss den besonderen Anforderungen des jeweiligen Reformerverfahrens genügen. Bei Reformern, welche mit einem Katalysator ausgestattet sind, ist es deshalb erforderlich, dass das zugeführte Wasser von hoher Reinheit und frei von Salzen ist.

Durch die erfindungsgemäße Wasseraufbereitungsanlage wird eine ausreichende Wassermenge für Reformer-Brennstoffzellensysteme an Bord von Luftfahrzeugen in der benötigten Qualität bereitgestellt.

In der erfindungsgemäßen Wasseraufbereitungsanlage werden die im Bordbetrieb anfallenden Abwässer, nämlich Grauwasser und Schwarzwasser, miteinander kombiniert und dann für die Nutzung in einem Reformerprozess aufbereitet. Das im "Wastetank" 2 verbleibende Abwasser muss dabei dünnflüssig genug sein, dass es am Boden in herkömmlicher Weise problemlos entsorgt werden kann. Zusätzlich werden in der erfindungsgemäßen Wasseraufbereitungsanlage aus Gründen der Gewichtseinsparung überflüssige Wassermengen über Bord gegeben. Hierfür ist es erforderlich und erfindungsgemäß sichergestellt, dass die Wasserqualität, die außenbords gegeben wird, ausreichend sauber und somit für Menschen am Boden ungefährlich ist.

Die im Bordbetrieb anfallenden Abwässer werden einerseits in Form von Grauwasser, bei dem es sich beispielsweise um das beim Betrieb von Handspülbecken anfallende Abwasser handelt, über Grauwasserzulauf 11 im Grauwasserbehälter 1 gesammelt. Andererseits werden die im Bordbetrieb anfallenden Schwarzwassermengen, bei denen es sich beispielsweise um Fäkalien aus den Bordtoiletten handelt, über Schwarzwasserzulauf 21 im Vakuumtank 2 gesammelt. Der Vakuumtank 2 steht hierfür unter Unterdruck, welcher über Vakuumleitung 23, welche mit einem Vakuumgenerator oder einer Vakuumpumpe (nicht gezeigt in Fig. 1) in Verbindung steht, erzeugt wird.

Durch das im Vakuumtank erzeugte Vakuum ist ein effektives und schnelles Absaugen der Bordtoiletten möglich. Das Grauwasser, welches im Sammeltank 1 aufgefangen wird, kann über ein Regelventil 11 entweder über eine Drainmast-Leitung 111 und einen sog. Drainmast (nicht gezeigt in Fig. 1) nach außen gegeben oder zur weiteren Verwendung über die Leitung 112 mit einem Separator 22 dem Vakuumtank 2 zugeführt werden. Im Vakuumtank 2 vermischt sich somit das anfallende Grauwasser aus Sammeltank 1 mit dem Schwarzwasser aus den Bord-WCs.

Das Grau-/Schwarzwassergemisch wird über eine Pumpe 6 einem ersten Rotationsfilter 7 über Einlass 71 zugeführt. Die separierten Feststoffanteile fließen über die Leitung 72 mit der Restflüssigkeit wieder zurück in den Vakuumtank 2. Dieser kann jeweils am Boden über die Leitung 24, Ventil 13 und Leitung 131 sowie über das Wegeventil 12 und Leitung 121 entleert werden.

An dieser Stelle gilt es zu beachten, dass die in der Wasseraufbereitungsanlage vorliegenden Ventile automatisch angesteuert werden können. Insbesondere sind hier elektrische, hydraulische oder pneumatisch betätigbare Ventile denkbar.

Die Entleerung des Vakuumtanks am Boden kann beispielsweise über eine externe Absaugung erfolgen (nicht gezeigt in Fig. 1).

Die Steuerung der zur Verfügung stehenden Wassermenge erfolgt vorzugsweise in drei getrennten Teilbereichen. Zum Ersten kann die anfallende Grauwassermenge über das Ventil 11 durch Ablassen in Richtung Drainmast 111 begrenzt werden. Als Zweites ist eine Mengenpufferung bei Verwendung des Behälters 3 möglich und als Drittes kann durch kurzzeitiges Umsteuern des Ventils 14 von einer Brennstoffaufbereitungsanlage nicht benötigter Wasserdampf über die Leitung 141 nach außen entlassen werden.

Separator 22 umfasst eine oder mehrere Sprühdüsen, durch welche Grauwasser in den Separator eingeleitet wird und welche zur Reinigung des Separators 22 von Anhaftungen verwendet werden.

Die im Rotationsfilter 7 gewonnene Flüssigkeit ist im Wesentlichen frei von Feststoffen, beinhaltet aber je nach Filterauslegung neben Wasser noch weitere Inhaltsstoffe. Um diese Inhaltsstoffe vom Wasseranteil zu trennen, sind weitere Verfahrensschritte nötig. Hierbei wird beispielsweise die im Rotationsfilter 7 gewonnene Flüssigkeit über Leitung 73, Rückschlagklappe 16 und Zulauf 31 dem Vorlagebehälter 3 zugeführt. In diesem Behälter 3 befindet sich beispielsweise ein feinkörniges Granulat einer chemisch aktiven Substanz, wie z. B. Aktivkohle und Zinkoxyd. Diese beiden Stoffe sind in der Lage, bestimmte Inhaltsstoffe der Flüssigkeit, wie z. B. Organika oder H₂S, an sich zu binden. Dieses Granulat wird mit der Flüssigkeit über Vorlagebehälterauslauf 32 und Pumpe 10, bei der es sich z.B. um eine Granulatpumpe handelt, als Granulat-/Grauwassergemisch durch Rohrleitung 101 und Rotationsfilterzulauf 81 einem zweiten Rotationsfilter 8 zugeführt.

Der zweite Rotationsfilter 8 trennt wiederum das Granulat von der Flüssigkeit. Das Filtrat ist nun im Wesentlichen klares Wasser. Das Granulat wird mit der Restflüssigkeit in den Behälter 3 über Rücklauf 82 und Leitung 33 zurückgegeben. Das am Filterausgang anstehende Wasser wird nun dem Verdampfer 5 zugeführt, wo auf diese Weise Wasserdampf 51 von hoher Reinheit für den Reformer gewonnen werden kann.

Der Verdampfer 5 wird hierbei über den Auslauf 83 des Rotationsfilters 8 gespeist. Zur Abtrennung weiterer Inhaltsstoffe, wie Salze, Phosphate und Sulfate, wird die gewonnene Flüssigkeit im Verdampfer 5 verdampft. Somit können die enthaltenen Salze als Rückstand 52 zurückgehalten werden, so dass dem Reformer Wasserdampf 51 über das Wegeventil 14 und die Rückschlagklappe 15 zugeführt werden kann, wie durch Bezugszeichen 151 angedeutet. Um diesen einfachen Verfahrensschritt zu realisieren, kann der Verdampfer 5 beispielsweise elektrisch beheizt werden, wie durch Bezugszeichen 53 angedeutet. Selbstverständlich könnte die zum Verdampfen der Flüssigkeit aufzuwendende Energie aber auch aus anderen Quellen stammen, wie beispielsweise der Abwärme einer bordinternen Brennstoffzelle o. ä..

Selbstverständlich können die in Fig. 1 dargestellten wesentlichen Bestandteile der Wasseraufbereitungsanlage in verschiedenen Kombinationen miteinander verbunden werden. So ist es beispielsweise denkbar, dass die zweite Stufe, welche im Wesentlichen aus Vorlagebehälter 3 und den entsprechenden Zu- bzw. Ableitungen besteht, und dafür vorgesehen ist, entsprechende Inhaltsstoffe, die im Wasser enthalten sind, zu binden, nicht im System zu integrieren. Hierfür wird beispielsweise der Ausgang 73 des Rotationsscheibenfilters 7, anders als in Fig. 1 dargestellt, direkt mit dem Eingang 83 des Verdampfers 5 zusammengeschlossen. Weiterhin ist zur Erhöhung der Filterleistung eine serielle Schaltung mehrerer Filter denkbar. Zur Erhöhung des Durchsatzes wiederum ist eine parallele Schaltung mehrerer Filter oder Vorlagebehälter oder Verdampfer denkbar. Weiterhin gestattet eine parallele Schaltung mehrerer identischer Elemente eine gewisse Redundanz, durch welche die Wahrscheinlichkeit für einen kompletten Systemausfall minimiert wird.

Die in Fig. 1 dargestellten Rotationsscheibenfilter 7, 8 bestehen beispielsweise aus kreisrunden, keramischen Filterscheiben, welche innen hohl sind. Dieser Hohlraum ist zu einer zentralen Hohlwelle hin geöffnet, über welche Flüssigkeit abfließen kann.

Die Scheiben werden über einen Antriebsmotor 9 in Rotation versetzt. Prinzipbedingt werden bei der Beschickung mit Fäkalien über eine Pumpe 6 alle Feststoffe durch die Rotation der Scheiben nach außen befördert und Flüssigkeit nach innen in den Hohlraum der Scheiben transportiert, wobei diese Flüssigkeit über die Hohlwelle abgezogen werden kann und die eingedickte Substanz außerhalb der Scheiben wieder zurück in den Vakuumbehälter 2 befördert wird.

Da im Granulat von Zeit zu Zeit eine Sättigung mit den aus dem Wasser entfernten Feststoffen eintritt, muss dieses in entsprechenden Service-Intervallen ausgetauscht werden. Dies erfolgt beispielsweise über Serviceleitung 34.

Zur Reinigung des Verdampfers 5 ist dieser zu durchspülen. Die Spülflüssigkeit kann über das Wegeventil 12 und die Leitungen 54 und 121 entsorgt werden.

Bei Minderabnahme von Wasserdampf durch den Reformer kann das Wegeventil 14 für den Reformer geschlossen werden und der Wasserdampf an die Atmosphäre außerhalb des Luftfahrzeuges entlassen werden. Dies ist durch Bezugszeichen 141 angedeutet. Vorteilhafterweise ist das dem Vorlagebehälter 3 zugegebene Granulat zum Binden der Inhaltsstoffe im Wasser ein wasserunlösliches Granulat, wodurch die Trennung von Granulat und Wasser, welche beispielsweise im Rotationsscheibenfilter 8 erfolgt, erleichtert wird.

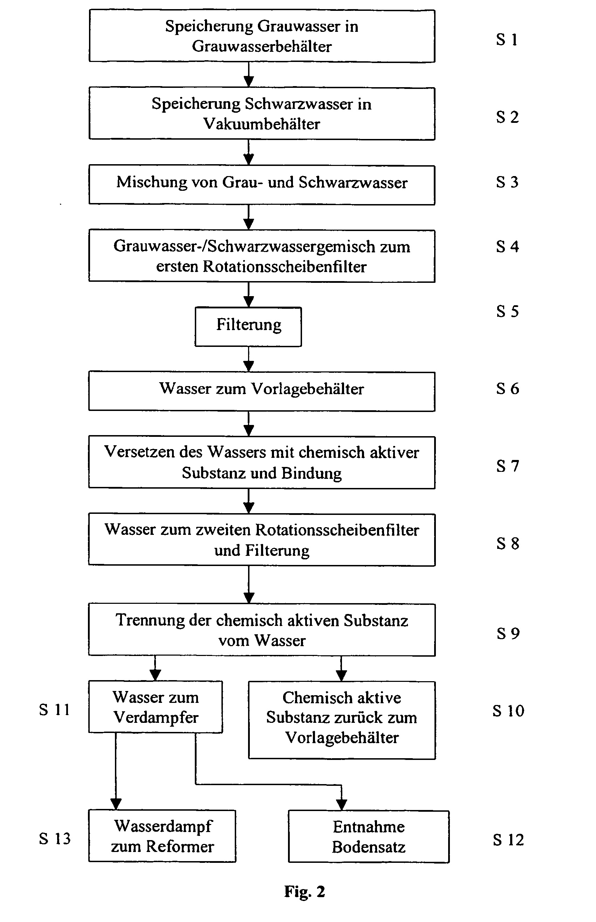

Fig. 2 zeigt ein Flussdiagramm eines Verfahrens gemäß einem bevorzugten Ausführungsbeispiel der vorliegenden Erfindung. In einem ersten Schritt S1 wird Grauwasser, welches beispielsweise dem normalen Bordbetrieb entstammt, in einem Grauwasserbehälter gespeichert. In einem zweiten Schritt S2 wird Schwarzwasser, welches beispielsweise einer Bordtoilette entstammt, in einem Vakuumbehälter gespeichert. Das im ersten Behälter gespeicherte Grauwasser kann, beispielsweise auf Abruf, dem Schwarzwasserbehälter zugeführt werden (Schritt S3). Dies kann beispielsweise dann geschehen, wenn das im Vakuumbehälter oder Schwarzwasserbehälter gespeicherte Gemisch nicht mehr ausreichend Wasserbestandteile aufweist bzw. wenn der Grauwasserbehälter überfüllt ist.

In einem nachfolgenden Schritt S4 wird dann dem Vakuumtank eine bestimmte Menge an Grauwasser-/Schwarzwassergemisch über eine Pumpe entnommen und einem ersten Rotationsfilter zugeführt. In diesem Rotationsfilter erfolgt dann in Schritt S5 eine Trennung zwischen Wasser und im Wasser enthaltenen Rückständen, welche in Form einer beispielsweise zähflüssigen Schlickmasse dem Vakuumtank zurückgeführt werden. Das abgetrennte Wasser wird in einem sechsten Schritt S6 einem Vorlagebehälter zugeleitet. Hier kann es dann mit Granulat oder anderen chemisch aktiven Substanzen versetzt werden (Schritt S7), welche beispielsweise Aktivkohle und Zinkoxyd umfassen und in der Lage sind, bestimmte Inhaltsstoffe der Flüssigkeit, wie z. B. Organika oder H₂S, an sich zu binden. Das entstehende Granulat-/Flüssigkeitsgemisch wird sodann in einem achten Schritt S8 über eine Pumpe vom Vorlagebehälter in einen zweiten Rotationsfilter geleitet. Hier erfolgt dann in einem neunten Schritt S9 eine Abtrennung des Granulats vom Wasser. Das Granulat wird nachfolgend dem Vorlagebehälter zurückgegeben (Schritt S10).

In einem elften Schritt S 11 wird das mehrmalig gefilterte Wasser einem Verdampfer zugeführt, welcher daraus Wasserdampf erzeugt. Hierbei werden weitere Inhaltsstoffe, wie Salze, Phosphate und Sulfate, im Verdampfer zurückbehalten. Diese zurückbehaltenen Inhaltsstoffe können zu einem späteren Zeitpunkt, beispielsweise über eine entsprechende Absaugeinrichtung, dem Verdampfer entnommen werden (Schritt S12). Der erzeugte Wasserdampf hingegen wird, beispielsweise über ein Wegeventil und eine entsprechende Rohrleitung mit Rückschlagventil, dem Bordbetrieb oder vorzugsweise einem nachgeschalteten Reformer oder einer Brennstoffaufbereitungsanlage zugeführt (Schritt S13). Somit ist der Wasserkreislauf innerhalb des Luftfahrzeugs weitgehend geschlossen und große Wasserspeicher, welche regelmäßig vom Bodenpersonal aufgetankt werden müssen, entfallen.

Die Erfindung beschränkt sich in ihrer Ausführung nicht auf die in der Figur dargestellte bevorzugte Ausführungsform. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

## Patentansprüche

1. Wasseraufbereitungsanlage für ein Luftfahrzeug, umfassend:
eine Brennstoffaufbereitungsanlage;
eine Wasserzuführungsanordnung zur Zuführung von Grauwasser oder Schwarzwasser;
eine Wasseraufbereitungsanordnung zur Aufbereitung des zugeführten Grauwassers oder Schwarzwassers; und
eine Wasserausgabeanordnung zur Ausgabe des aufbereiteten Grauwassers oder Schwarzwassers und zur Zuführung von aus dem aufbereiteten Grauwasser oder Schwarzwasser erzeugten Wasserdampf an eine Brennstoffaufbereitungsanlage;
wobei das von der Wasserausgabeanordnung ausgegebene Wasser von der Brennstoffaufbereitungsanlage nutzbar ist;
wobei die Wasseraufbereitungsanordnung eine erste Stufe, eine zweite Stufe und eine dritte Stufe umfasst;
wobei die erste Stufe zu einem ersten Filtern des zugeführten Grauwassers oder Schwarzwassers einen ersten Rotationsscheibenfilter umfasst;
wobei die zweite Stufe zu einem Binden von im Wasser enthaltenen Inhaltsstoffen an einer ersten chemisch aktiven Substanz ausgeführt ist; und
wobei die dritte Stufe zu einem zweiten Filtern des Wassers einen zweiten Rotationsscheibenfilter umfasst;
wobei die Wasseraufbereitungsanordnung oder die Wasserausgabeanordnung einen Verdampfer umfasst;
wobei der Verdampfer zum Verdampfen des aufbereiteten Grauwassers oder Schwarzwassers ausgeführt ist;
wobei der Wasserdampf der Brennstoffaufbereitungsanlage zugeführt wird.

2. Wasseraufbereitungsanlage nach Anspruch 1,
wobei der im Verdampfer erzeugte Wasserdampf oder daraus entstehendes Kondensat über ein erstes Ventil entweder nach Außenbord ableitbar ist oder über ein zusätzliches Rückschlagventil einer Brennstoffaufbereitungsanlage zuführbar ist.

3. Wasseraufbereitungsanlage nach Anspruch 1 oder 2,
wobei Reststoffe aus dem Verdampfer über ein zweites Ventil nach Außenbord ableitbar sind.

4. Wasseraufbereitungsanlage nach einem der vorhergehenden Ansprüche,
wobei die Wasserzuführungsanordnung einen ersten Abwasserspeicher für Grauwasser oder Schwarzwasser umfasst; und
wobei der erste Abwasserspeicher als Vakuumbehälter ausgerührt ist.

5. Wasseraufbereitungsanlage nach Anspruch 4,
wobei die Wasserzuführungsanordnung weiterhin einen zweiten Abwasserspeicher für Grauwasser, einen Vakuum-Transport und einen Auslaufstutzen umfasst; und
wobei das im zweiten Abwasserspeicher gespeicherte Grauwasser wahlweise vom zweiten Abwasserspeicher über den Vakuum-Transport in den ersten Abwasserspeicher oder über den Auslaufstutzen nach Außenbord ableitbar ist.

6. Wasseraufbereitungsanlage nach Anspruch 4 oder 5,
wobei der erste Abwasserspeicher über zumindest ein zweites Ventil entleerbar ist.

7. Wasseraufbereitungsanlage nach einem der vorhergehenden Ansprüche,
wobei die Wasserzuführungsanordnung weiterhin einen Separator und zumindest eine Sprühdüse umfasst;
wobei im Separator Feststoffe vom Transportmedium Luft eines Vakuum-Toilettensystems trennbar sind; und
wobei Grauwasser über die zumindest eine Sprühdüse in den Separator zur Reinigung des Separators von Anhaftungen einleitbar ist.

8. Wasseraufbereitungsanlage nach einem der Ansprüche 1 bis 7,
wobei in dem ersten Rotationsscheibenfilter eine zumindest teilweise Abtrennung und Ableitung der im zugeführten Grauwasser oder Schwarzwasser enthaltenen Flüssigkeit von den darin enthaltenen Rückständen durchführbar ist; und
wobei die Rückstände in den ersten Abwasserspeicher der Wasserzuführungsanordnung rückleitbar sind.

9. Wasseraufbereitungsanlage nach einem der Ansprüche 1 bis 8,
wobei die zweite Stufe einen Vorlagebehälter umfasst;
wobei in der zweiten Stufe dem Wasser im Vorlagebehälter ein Granulat aus zumindest der ersten chemisch aktiven Substanz oder einer zweiten chemisch aktiven Substanz beimischbar ist; und
wobei die zweite chemisch aktive Substanz Aktivkohle umfasst.

10. Wasseraufbereitungsanlage nach Anspruch 9,
wobei die zweite Stufe ein Rückschlagventil aufweist, durch welches einen Flüssigkeitsrückfluss aus dem Vorlagebehälter verhinderbar ist.

11. Wasseraufbereitungsanlage nach Anspruch 9 oder 10,
wobei Flüssigkeit aus der ersten Stufe über das Rückschlagventil direkt dem Verdampfer zuführbar ist.

12. Wasseraufbereitungsanlage nach einem der Ansprüche 9 bis 11,
wobei das Granulat wasserunlöslich ist.

13. Wasseraufbereitungsanlage nach einem der Ansprüche 9 bis 12,
wobei die dritte Stufe einen Auslauf umfasst;
wobei Wasser aus dem Vorlagebehälter in der dritten Stufe durch den zweiten Rotationsscheibenfilter zumindest teilweise abtrennbar ist; und
wobei nach zumindest teilweiser Abtrennung das Wasser über den Auslauf ableitbar ist.

14. Wasseraufbereitungsanlage nach Anspruch 13,
wobei ein gemeinsamer Antrieb für den ersten Rotationsscheibenfilter und den zweiten Rotationsscheibenfilter vorgesehen ist.

15. Luftfahrzeug mit einer Wasseraufbereitungsanlage nach einem der Ansprüche 1 bis 14.

16. Verfahren zum Aufbereiten von Wasser in einem Luftfahrzeug, umfassend die Schritte:
Zuführung von Grauwasser oder Schwarzwasser durch eine Wasserzuführungsanordnung;
Aufbereitung des zugeführten Grauwassers oder Schwarzwassers durch eine Wasseraufbereitungsanordnung, umfassend ein erstes Filtern des zugeführten Grauwassers oder Schwarzwassers durch einen ersten Rotationsscheibenfilter, ein Binden von im Wasser enthaltenen Inhaltsstoffen an einer ersten chemisch aktiven Substanz, und ein zweites Filtern des Wassers durch einen zweiten Rotationsscheibenfilter;
Zuführen des mehrmalig gefilterten Wassers an einen Verdampfer;
Verdampfen des Wassers;
Zuführung des Wasserdampfs an eine Brennstoffaufbereitungsanlage;
wobei das von der Wasserausgabeanordnung ausgegebene Wasser von der Brennstoffaufbereitungsanlage nutzbar ist.

## Claims

1. A water treatment system for an aircraft, comprising:
a reformer;
a water supply arrangement for supplying gray water or black water;
a water treatment arrangement for treating the supplied gray water or black water; and
a water delivery arrangement for delivering the treated gray water or black water and for supplying water vapor produced from the treated gray water or black water to a reformer;
wherein the water delivered by the water delivery arrangement is suitable for use in the reformer;
wherein the water treatment arrangement comprises a first stage, a second stage and a third stage;
wherein the first stage comprises a first rotating disk filter for a first filtration of the supplied gray water or black water;
wherein the second stage is arranged for binding substances contained in the water to a first chemically active substance; and
wherein the third stage comprises a second rotating disk filter for a second filtration of the water;
wherein the water treatment arrangement or the water delivery arrangement comprises an evaporator;
wherein the evaporator is arranged for evaporating the treated gray water or black water;
wherein the water vapor is supplied to the reformer.

2. The water treatment system of claim 1,
wherein the water vapor produced in the evaporator or a condensate created thereof is via a first valve either dischargeable outboard or deliverable to a reformer via an additional check valve.

3. The water treatment system of claim 1 or 2,
wherein waste materials occurring in the evaporator are dischargeable outboard via a second valve.

4. The water treatment system of any one of the preceding claims,
wherein the water supply arrangement comprises a first waste water tank for gray water or black water; and
wherein the first waste water tank is arranged as vacuum tank.

5. The water treatment system of claim 4,
wherein the water supply arrangement comprises furthermore a second waste water tank for gray water, a vacuum transport system and an outlet pipe; and
wherein the gray water stored in the second waste water tank is selectively dischargeable from the second waste water tank into the first waste water tank via the vacuum transport system or dischargeable outboard via the outlet pipe.

6. The water treatment system of any one of claim 4 or 5,
wherein the first waste water tank can be emptied via at least a second valve.

7. The water treatment system of any one of the preceding claims,
wherein the water supply arrangement comprises furthermore a separator and at least one spray nozzle;
wherein solids are separable from the transport medium air of a vacuum toilet system in the separator; and
wherein gray water is introducible via the at least one spray nozzle in the separator to remove deposits from the separator.

8. The water treatment of any one of the claims 1 to 7,
wherein in the first rotating disk filter an at least partially separation and discharge of in the supplied gray water or black water contained liquid from the therein contained residues can be performed; and
wherein the residues are disposable into the first waste water tank of the water supply arrangement.

9. The water treatment system of any one of the claims 1 to 8,
wherein the second stage comprises an collection tank;
wherein in the second stage a granulate of at least the first chemically active substance or a second chemically active substance can be added to the water in the collection tank; and
wherein the second chemically active substance comprises activated carbon.

10. The water treatment system of claim 9,
wherein the second stage comprises a check valve, provided for preventing a back flow of liquid from the collection tank.

11. The water treatment system of claim 9 or 10,
wherein the liquid from the first stage is directly suppliable to the evaporator via the check valve.

12. The water treatment system of any one of the claims 9 to 11,
wherein the granulate is water-insoluble.

13. The water treatment system of any one of claims 9 to 12,
wherein the third stage comprises an outlet;
wherein water from the collecting tank can be at least partially separated in the third stage by means of a second rotating disk filter; and
wherein the water is dischargeable via the outlet after the at least partial separation.

14. The water treatment system of claim 13,
wherein a common drive is provided for the first rotating disk filter and the second rotating disk filter.

15. An aircraft with a water treatment system of any one of claims 1 to 14.

16. A method for treating water in an aircraft, comprising the steps:
supplying gray water or black water by means of a water supply arrangement;
treating the supplied gray water or black water by means of a water treatment arrangement, comprising a first filtration of the supplied gray water or black water by means of a first rotating disk filter, a binding of substances contained in the water to a first chemically active substance, and a second filtration of the water by means of a second rotating disk filter;
supply the repeatedly filtered water to an evaporator;
evaporating the water;
supplying the water vapor to a reformer;
wherein the water delivered by the water delivery arrangement is suitable for use in the reformer.

## Revendications

1. Installation de traitement d'eau pour un aéronef, comprenant :
une installation de traitement du carburant ;
un agencement d'arrivée d'eau pour l'arrivée d'eau grise ou d'eau noire;
un agencement de traitement d'eau pour le traitement de l'arrivée d'eau grise ou
d'eau noire ; et
un agencement de sortie d'eau pour la sortie de l'eau grise ou de l'eau noire traitée et
pour l'arrivée de la vapeur d'eau, produite par l'eau grise ou l'eau noire traitée, dans
une installation de traitement du carburant;
installation de traitement d'eau dans laquelle
l'eau issue de l'agencement de sortie d'eau est utilisable par l'installation de traitement du carburant ;
l'agencement de traitement d'eau comprend un premier étage, un deuxième étage et
un troisième étage ;
le premier étage comprenant, pour un premier filtrage de l'arrivée d'eau grise ou
d'eau noire, un premier filtre rotatif à disques ;
le deuxième étage étant réalisé pour lier des matières renfermées dans l'eau à une première substance chimiquement active ; et
le troisième étage comprenant, pour un second filtrage de l'eau, un second filtre rotatif à disques ;
l'agencement de traitement d'eau ou l'agencement de sortie d'eau comprend un évaporateur ;
l'évaporateur est réalisé pour évaporer l'eau grise ou l'eau noire traitée;
la vapeur d'eau est envoyée dans l'installation de traitement du carburant.

2. Installation de traitement d'eau suivant la revendication 1, dans laquelle la vapeur d'eau produite dans l'évaporateur ou le condensat formé peuvent être, soit évacués hors bord par l'intermédiaire d'une première soupape, soit envoyés dans une installation de traitement du carburant par l'intermédiaire d'une soupape anti-retour supplémentaire.

3. Installation de traitement d'eau suivant l'une des revendications 1 et 2, dans laquelle des résidus de l'évaporateur peuvent être évacués hors bord par l'intermédiaire d'une seconde soupape.

4. Installation de traitement d'eau suivant l'une des revendications précédentes, dans laquelle
l'agencement d'arrivée d'eau comprend un premier réservoir d'eaux usées pour l'eau grise ou l'eau noire ; et
le premier réservoir d'eaux usées est réalisé sous forme de réservoir à vide.

5. Installation de traitement d'eau suivant la revendication 4, dans laquelle l'agencement d'arrivée d'eau comprend en outre un second réservoir d'eaux usées pour l'eau grise, un transport à vide et une tubulure de décharge ; et
l'eau grise, accumulée dans le second réservoir d'eaux usées, peut être évacuée sélectivement du second réservoir d'eaux usées, par l'intermédiaire du transport à vide, dans le premier réservoir d'eaux usées ou hors bord par l'intermédiaire de la tubulure de décharge.

6. Installation de traitement d'eau suivant l'une des revendications 4 ou 5, dans laquelle le premier réservoir d'eaux usées peut être vidangé par l'intermédiaire d'au moins une seconde soupape.

7. Installation de traitement d'eau suivant l'une des revendications précédentes, dans laquelle
l'agencement d'arrivée d'eau comprend en outre un séparateur et au moins un pulvérisateur ;
des solides sont séparables du fluide de transport à vide d'un système de toilettes dans le séparateur ; et
l'eau grise peut être injectée, par l'intermédiaire du au moins un pulvérisateur, dans le séparateur pour le nettoyer de particules adhérentes.

8. Installation de traitement d'eau suivant l'une des revendications 1 à 7, dans laquelle une séparation et évacuation, au moins partielles, du liquide, contenu dans l'arrivée d'eau grise ou d'eau noire, des résidus renfermés dans ce dernier est réalisable dans le premier filtre rotatif à disques ; et
les résidus peuvent être renvoyés dans le premier réservoir d'eaux usées de l'agencement d'arrivée d'eau.

9. Installation de traitement d'eau suivant l'une des revendications 1 à 8, dans laquelle le deuxième étage comprend un récipient collecteur ;
dans le deuxième étage, un granulat d'au moins la première substance chimiquement active ou d'une seconde substance chimiquement active peut être mélangé à l'eau du récipient collecteur ; et
la seconde substance chimiquement active comprend du charbon actif.

10. Installation de traitement d'eau suivant la revendication 9, dans laquelle le deuxième étage présente une soupape anti-retour, qui permet d'empêcher un reflux de liquide du récipient collecteur.

11. Installation de traitement d'eau suivant l'une des revendications 9 et 10, dans laquelle du liquide peut être envoyé directement du premier étage dans l'évaporateur par l'intermédiaire de la soupape anti-retour.

12. Installation de traitement d'eau suivant l'une des revendications 9 à 11, dans laquelle le granulat est insoluble dans l'eau.

13. Installation de traitement d'eau suivant l'une des revendications 9 à 12, dans laquelle le troisième étage comprend une décharge ;
de l'eau du récipient collecteur est séparable, au moins en partie, dans le troisième étage par le second filtre rotatif à disques ; et
l'eau peut être évacuée par la décharge après la séparation au moins partielle.

14. Installation de traitement d'eau suivant la revendication 13, dans laquelle une commande commune est prévue pour le premier filtre rotatif à disques et pour le second filtre rotatif à disques.

15. Aéronef comprenant une installation de traitement d'eau suivant l'une des revendications 1 à 14.

16. Procédé de traitement d'eau dans un aéronef, comprenant les étapes:
arrivée d'eau grise ou d'eau noire par un agencement d'arrivée d'eau ;
traitement de l'arrivée d'eau grise ou d'eau noire par un agencement de traitement d'eau, comprenant un premier filtrage de l'arrivée d'eau grise ou d'eau noire par un premier filtre rotatif à disques, une liaison de matières renfermées dans l'eau à une première substance chimiquement active, et un second filtrage de l'eau par un second filtre rotatif à disques ;
arrivée de l'eau filtrée à plusieurs reprises dans un évaporateur;
évaporation de l'eau ;
arrivée de la vapeur d'eau dans une installation de traitement du carburant ;
l'eau issue de l'agencement de sortie d'eau étant utilisable par l'installation de traitement du carburant.
